# EUROPÄISCHE PATENTANMELDUNG

(11) **EP 1 421 982 A1**
(43) Veröffentlichungstag der Anmeldung: **26.05.2004**
(21) Anmeldenummer: 03026255.4
(22) Anmeldetag: 14.11.2003
(51) Int. Cl.: B01D 21/02, B01J 8/00, B01J 8/20, C12M 1/02

(54) **Verfahren und Vorrichtung zum Abzug von Suspensionen aus einem Reaktor**

(30) Priorität: 14.11.2002 DE 10253133
(71) Anmelder: LINDE-KCA-Dresden GmbH, 01277 Dresden (DE)
(72) Erfinder: Pankow, Steffen Dr., 01219 Dresden (DE)

(57) **Zusammenfassung**

Es werden ein Verfahren und eine Vorrichtung zum Abzug von zur Entmischung neigenden Suspensionen aus einem Reaktor (1), insbesondere einem Biogasreaktor beschrieben. Um eine Ablagerung von Stoffen im unteren Teil des Reaktors (1) zu verhindern, wird durch schlagartiges Öffnen eines Bodenabzugs (3) eine Sogwirkung auf die im Reaktor (1) abgelagerten Stoffe ausgeübt. Über eine großdimensionierte Bodenabzugsleitung (3,4) wird ein Suspensionsstrom mit hohem Feststoffanteil abgezogen und bevorzugt einem Separationsreaktor (2) zugeführt. Im Separationsreaktor (2) wird eine gezielte Entmischung der Suspension herbeigeführt, so dass die zur Ablagerung neigenden Stoffe ausgeschleust werden können.

## Beschreibung

Die Erfindung betrifft ein Verfahren zum Abzug von zur Entmischung neigenden Suspensionen aus einem Reaktor sowie eine Vorrichtung zur Durchführung des Verfahrens.

Zur biologischen Behandlung von organischen Materialien werden unter anderem Nassvergärungsverfahren eingesetzt. Diese Verfahren eignen sich besonders dort, wo das Ausgangsmaterial neben einem hohen Anteil an anaerob abbaubaren Bestandteilen einen relativ hohen Feuchtigkeitsanteil aufweist.

Üblicherweise wird bei solchen Ausgangsmaterialien - aber auch bei trockneren Einsatzstoffen - in einer ersten Stufe - dem sogenannten Anmaischen - eine pumpfähige Suspension mit einem Trockensubstanzgehalt von 5 bis 15% hergestellt. Dabei finden verschiedene Systeme Anwendung, vielfach werden Stofflöser eingesetzt. Anschließend gelangt das Medium - ggf. über entsprechende Zwischenstufen - in den Gärreaktor (auch Faulreaktor, ananerobe Stufe).

Ein Hauptproblem der Behandlung dieser Abfälle resultiert aus ihrer Zusammensetztung, sie enthalten einen mehr oder minder hohen Anteil von mineralischen Bestandteilen in sandähnlicher Form. Dieser Anteil kann darüber hinaus im Ausgangsprodukt in Abhängigkeit von saisonalen Faktoren und der Zusammensetzung des Einzugsgebietes stark schwanken. Eben diese Bestandteile führen - beim ansonsten relativ gut beherrschbaren Nassvergärungsverfahren - zu hohen Verschleißerscheinungen. Die Abrasion wirkt sich besonders bei Pumpen und Rohrleitungen negativ aus und verursacht hohe Aufwendungen bei den Entwässerungsaggregaten (Zentrifugen, Pressschnecken). Zusätzlich führt die ungewollte Ablagerung dieser Stoffe bei Änderung des Fließverhaltens zu Betriebsproblemen, die nur durch erheblichen Wartungs- und Reinigungsaufwand beherrschbar werden können.

Deshalb wird bisher bereits versucht, einerseits durch entsprechende Trennvorrichtungen (Siebe, Klasierer) gezielt die sandähnlichen Bestandteile möglichst umfassend und lokal abzutrennen und andererseits an den übrigen Stellen des Verfahrens durch gezielten Engergieeinsatz (Rührwerke, andere Umwälzeinrichtungen) Ablagerungen zu vermeiden.

Besondere Probleme ergeben sich dabei jedoch aus der Tatsache, dass diese sandähnlichen Bestandteile in der Regel mit leicht abbaubaren Bestandteilen überzogen sind bzw. dass die mineralischen Komponenten in Flockenstrukturen eingebunden sind. Diese Flockenstrukturen verhindern ein rasches Abtrennen durch Sedimentation. Der organische Überzug führt wiederum dazu, dass im Zuge der Abtrennung des anorganischen Anteils auch gut vergärbares Material ausgeschleust wird.

Der Abbauprozess im Gärreaktor führt zwangsläufig dazu, dass die Sandkörner umgebende organische Masse abgebaut wird. Zugleich verringert sich im Rahmen dieses Prozesses der relative Festoffanteil, d. h. die Suspension wird dünner. Damit ergibt sich nunmehr eine wesentlich erhöhte Neigung dieser mineralischen Bestandteile zu sedimentieren.

Gerade dieser Effekt führt in der Konsequenz dazu, dass es im Bodenbereich von derartigen Reaktoren zu Ablagerungen kommt. Diese Ablagerungen werden durch entprechende Umwälzsysteme immer wieder in die Suspension eingemischt, letztlich sind sie aber aus dem System auszuschleusen.

Vergleichend kann hier auf die Abwassertechnik verwiesen werden, wo seit langem bei Faultürmen ein kegelförmiger Reaktorboden mit Bodenabzugsleitung bekannt ist, der eine Ansammlung unerwünschter Inhaltsstoffe am Reaktorboden verhindert. Bessere Fließeigenschaften und geringere Feststoffbelastung stellen jedoch niedrigere Anforderungen an das Abzugssystem.

Die bisher üblichen Abzugssysteme haben den Nachteil, dass bedingt durch relativ niedrige Fließgeschwindigkeiten bereits innerhalb des Reaktors eine Entmischung stattfindet und lediglich Supension mit vermindertem Feststoffanteil aus dem Reaktor entfernt wird.

Die teilweise praktizierte Übertragung schon bekannter Abzugssysteme aus der Abwassertechnik (Faulturm) führte daher in der Vergangenheit verschiedentlich zum Versanden von Gärreaktoren.

Deshalb wurden für Biogasanlagen spezielle Ausrüstungen entwickelt, von denen stellvertretend folgende genannt seien:

### DE 19 747 882 A1:

Entleerungsvorrichtung, wobei eine außerhalb des Reaktors angeordnete Grube als Schwerststoffschleuse dient und der Förderschacht so angeordnet ist, dass eine Entnahme immer möglich ist.

### WO 94/26385 A 1:

Sedimententnahme aus einem Reaktor durch ein System von zwei Spiralförderem (einmal horizontal, einmal schräg)

### WO 94/26637 A 1:

### Sedimententnahme über ein 2-Schieber-Schleusensystem

Der Erfindung liegt die Aufgabe zugrunde, ein Verfahren der eingangs genannten Art sowie eine Vorrichtung zur Durchführung des Verfahrens so auszugestalten, dass eine sichere Entfernung von zur Ablagerung neigenden Stoffen aus dem Reaktor ermöglicht wird.

Diese Aufgabe wird erfindungsgemäß verfahrensseitig dadurch gelöst, dass durch schlagartiges Öffnen des Bodenabzugs eine Sogwirkung auf im Reaktor abgelagerte Stoffe ausgeübt wird und ein Suspensionsstrom mit hohem Feststoffanteil abgezogen wird.

Die Grundüberlegung der Erfindung besteht also darin, zur Vermeidung der geschilderten Gefährdung von nachgeschalteten Einrichtungen, z. B. Entwässerungseinrichtungen, durch Abrasion die zur Ablagerung neigenden Stoffe gezielt aus dem Reaktor auszuschleusen und abzutrennen. Dabei geht die Erfindung davon aus, dass für den insbesondere zu betrachtenden Einsatzfall der Behandlung von Bioabfall bzw. Hausmüll im weitesten Sinne die angestrebte sichere Entfernung von zur Ablagerung neigenden Stoffen aus dem Reaktor nur möglich ist, wenn mittels eines möglichst großen Massestromes, vorteilhafterweise verbunden mit einem Impuls, die Vorraussetzung zum Transport eines hohen Feststoffanteils im Suspensionsstrom geschaffen wird.

Eine besonders bevorzugte Ausführung der Erfindung sieht vor, dass der vom Reaktor abgezogene Suspensionsstrom mit hohem Feststoffanteil einem Separationsreaktor zugeführt wird, in dem eine gezielte Entmischung der Suspension durchgeführt wird. Zweckmäßigerweise ist der Separationsreaktor im unteren Teil kegelförmig ausgebildet. Der Suspensionsstrom mit hohem Festsstoffanteil wird vorzugsweise in diesen unteren Abschnitt des Separationsreaktors eingeleitet, so dass aufgrund des Zykloneffekts in diesem Abschnitt des Separationsreaktors abgesetzte Stoffe aus dem Separationsreaktor abgezogen werden können. Durch Eintrag von Gas in diesen unteren Abschnitt des Separationsreaktors kann die Entmischung der Suspension zusätzlich unterstützt werden.

Die Erfindung betrifft femer eine Vorrichtung zum Abzug von zur Entmischung neigenden Suspensionen aus einem Reaktor mit einer eine Abzugsarmatur aufweisenden Bodenabzugsleitung.

Vorrichtungsseitig wird die gestellte Aufgabe erfindungsgemäß dadurch gelöst, dass die Bodenabzugsleitung in einen Separationsreaktor zur Entmischung der Suspension mündet und die Abzugsaramtur so ausgelegt ist, dass ein schlagartiges Öffnen ermöglicht wird.

Vorzugsweise weist die Bodenabzugsleitung einen Durchmesser von 150 mm bis 400 mm auf. Die Verwendung einer derartig großdimensionierten Bodenabzugsleitung ermöglicht in Kombination mit dem schlagartigen Öffnen der Abzugsarmatur eine extreme Sogwirkung für abgelagerte, insbesondere mineralische, Bestandteile im Reaktor. Durch Auswaschung und Abtrennung der insbesondere kömigen, mineralischen Bestandteile im nachgeschalteten Separationsreaktor gewährleistet einen sicheren Schutz der nachgelagerten System für die Feststoffabtrennung (z. B. Zentrifugen, Pressschnecken).

Der gewünschte Abtransport eines großen Massestromes vom Reaktor in den Separationsreaktor wird weiterhin dadurch unterstützt, dass der Separationsreaktor bevorzugt ein Volumen von 20m³ bis 100m³ aufweist. Dadurch kann die abgezogene Suspension in ein relativ großdimensioniertes Volumen entlassen werden.

Zur weiteren Verbesserung der Entmischung der Suspension im Separationsreaktor wird ferner vorgeschlagen, dass die Bodenabzugsleitung tangential in den Separationsreaktor mündet. Außerdem ist der Separationsreaktor zweckmäßigerweise senkrecht ausgerichtet und weist im oberen Teil einen wesentlich kleineren Querschnitt auf als im mittleren Teil. Im unteren Teil ist der Separationsreaktor bevorzugt kegelförmig ausgebildet, wobei die Bodenabzugsleitung vom Reaktor in diesem kegelförmigen Abschnitt des Separationsreaktors mündet, während am unteren Ende des kegelförmigen Abschnitts ein Sedimentabzug vorgesehen ist.

Der Separationsreaktor kann gleichzeitig zur Schwimmschlammentnahme genutzt werden. Hierzu kann im oberen Bereich des Reaktors ein Schwimmschlammabzug angeordnet sein, der mit dem oberen Bereich des Separationsreaktors in Verbindung steht.

Vorteilhafterweise besitzt der Separationsreaktor unterhalb der Einmündung der Bodenabzugsleitung eine Feststoffschleuse, über die der Austrag von mineralischen Bestandteilen nach einer gezielten Entmischung ermöglicht wird, wobei die Entmischung durch gezielte Eintragung von Gas insbesondere Biogas, unterstützt werden kann. Der Gaseintrag kann dabei so gestaltet sein, dass im Bedarfsfall Gas über die Bodenabzugsleitung in den Reaktor zurückgedrückt werden kann. Hierzu ist zweckmäßigerweise im unteren Bereich des Separationsreaktors mindestens eine Gaseintragseinrichtung angeordnet. Sofern es sich beim Reaktor um einen Biogasreaktor handelt, bietet sich die Verwendung von Biogas für den Gaseintrag an. In diesem Fall steht die Gaseintragseinrichtung mit der Biogasabführleitung des Biogasreaktors in Verbindung.

Gemäß einer Weiterbildung des Erfindungsgedankens wird im Sinne eines optimierten Sedimentaustrages der Separationsreaktor mit einem Umwälzsystem im Reaktor, insbesondere im Biogasreaktor, kombiniert. Das Umwälzsystem ist vorzugsweise so ausgebildet, dass es die Sedimente gezielt in einen kleinen Abzugstrichter in der Reaktormitte transportiert, wobei für diesen Transportvorgang vorzugsweise gepulste Wasserstöße oder Luft-Wasser-Gemisch-Stöße eingesetzt werden. Hierfür ist die Umwälzeinrichtung mit Wasserstrahldüsen ausgestattet. Dieses Umwälzsystem kann im Bedarfsfall mit dem Seperationsreaktor verbunden werden, so dass zumindest von Zeit zu Zeit, eine Feststoffentnahme auch an verschiedenen Punkten der Peripherie möglich ist. Eine mit extremen Kosten verbundene Entleerung des Reaktors wird dadurch vermieden. Eine weitere Ausgestaltung der Erfindung sieht vor, dass im oberen Bereich des Separationsreaktors mindestens eine Spühldüse angeordnet ist, so dass der Separationsreaktor in regelmäßigen Abständen vollständig gereinigt werden kann.

Die Erfindung eignet sich prinzipiell für alle Reaktoren, bei denen das Problem des Abzugs von zur Entmischung neigenden Suspensionen besteht. Insbesondere ist die Erfindung zur Verwendung bei Biogasreaktoren vorgesehen.

Die mit der Erfindung erzielten Vorteile lassen sich wie folgt zusammenfassen:
- gezielter Austrag von zur Ablagerung neigenden Schwerststoffen aus dem Reaktor.
- Impulsartiger Start des Abzugsvorganges unter Verwendung von Absperrarmaturen mit Standardcharakteristik (Öffnungs- bzw. Schließzeit, Verschleißverhalten, Dichtungssysteme)
- Abtrennung der mineralischen Bestandteile und somit Schutz der Folgestufen.
- Förderung des Entgasungsverhaltens, Unterdrückung von Schaumentwicklung in den Folgestufen.

Als zusätzliches Plus kann der Separationsreaktor auch zur einfachen Entnahme von Schwimmschlamm aus dem Reaktor genutzt werden. Da der Separationsreaktor zweckmäßigerweise die gleiche Behälterhöhe aufweist wie der Reaktor, z. B. Biogasreaktor, stellt er eine sichere Entnahmeschleuse dar. Die Gefahr der Kontaminierung der Umgebung wird gegenüber derzeit eingesetzten Systemen deutlich verbessert.

In der Gesamtbetrachtung wird deutlich, dass die Erfindung eine wesentliche Erneuerung auf dem Gebiet von Reaktorsystemen darstellt. Sie ist kombinierbar mit verschiedenen Gärreaktortypen und verbessert deren Nutzung im Bereich Bioabfall/Hausmüll. Auch die Anordnung bzw. Nachrüstung eines Separationsreaktors für mehrere Reaktoren ist denkbar.

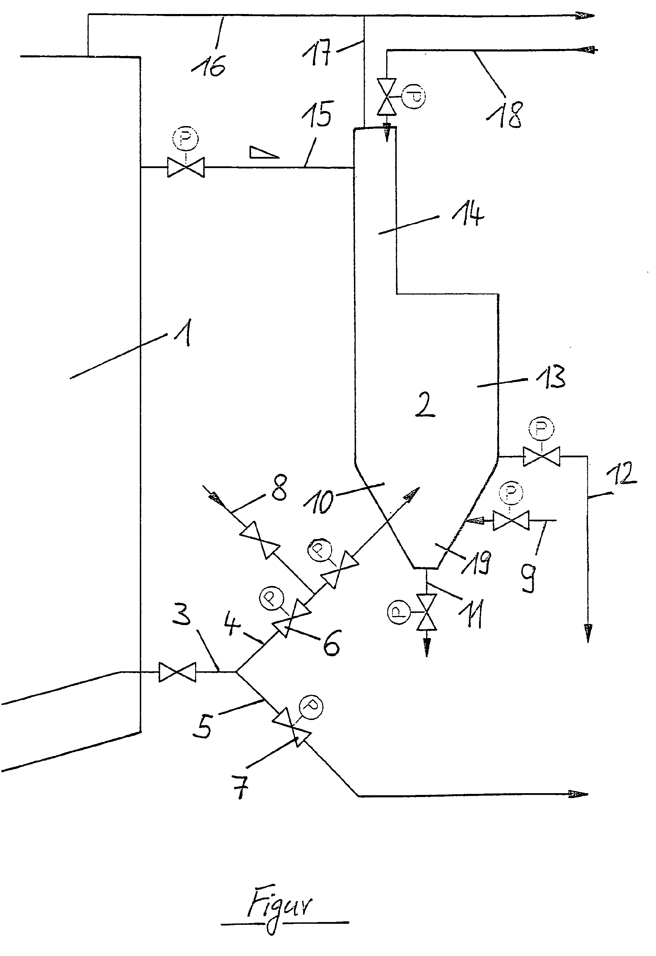

Im Folgenden soll die Erfindung anhand eines in der Figur schematisch dargestellten Ausführungsbeispiels näher erläutert werden.

Die Figur zeigt einen Biogasreaktor 1 mit einer am Kopf des Biogasreaktors 1 angeordneten Gasabzugsleitung 16 für produziertes Biogas und einer Bodenabzugsleitung 3 zum Abzug von zur Entmischung neigenden Suspensionen vom Biogasreaktor 1. Die abgezogene Suspension wird über Leitung 4 und eine Abzugsarmatur 6 in den unteren kegelförmig ausgebildeten Abschnitt 10 des Separationsreaktors 2 eingeleitet. Optional kann die Suspension über Leitung 5 und eine Absperrarmatur 7 kontinuierlich abgezogen werden. Ein weitgehender Abzug von zur Ablagerung neigenden Stoffen aus dem Biogasreaktor 1 wird dadurch ermöglicht, dass der Abzug über einen zwischengeschalteten Separationsreaktor 2 erfolgt, der im unteren Teil 10 über eine relativ großdimesionierte Bodenabzugsleitung 4 und 3 (Durchmesser: 300 mm) mit dem eigentlichen Reaktorraum des Biogasreaktors 1 verbunden ist und im oberen Teil ein Abzugsrohr 14 besitzt. Dieser Aufbau führt zu hydraulischen Verhältnissen (zu Beginn des Abzugsvorganges wirkt je nach Reaktorhöhe eine Druckhöhendifferenz von 15 - 20 mWS), aufgrund derer das Faulgut im Normalfall über die Bodenabzugsleitung 3, 4 in den Separationsreaktor 2 schießt. Die Suspensionsströmung wird dabei tangential so geführt, dass eine Ringströmung entsteht, verbunden mit den aus Hydrozyklonen bekannten Eigenschaften.

Ist der großvolumige Mittelteil (13) (Durchmesser 1.000 - 2.000 mm) des Separationsreaktors (2) gefüllt, so steigt der Füllstand im vom Durchmesser kleiner dimensionierten Aufstiegsrohr (14) (Durchmesser 300 - 500 mm) relativ schnell.

Entsprechend geht die Fließgeschwindigkeit in der Bodenabzugsleitung (4) zurück. Der Abfluss der Suspension kann nun mittels der Abzugsarmatur (6) in der Bodenabzugsleitung (4) gestoppt werden, ohne dass hier größerer Verschleiß zu verzeichnen ist.

Im nunmehr abgetrennten Separationsreaktor (2) kann im abgesperrten Zustand mittels komprimiertem Biogas (im Anfahrbetrieb könnte wahlweise auch Innertgas eingesetzt werden) die abgezogene Suspension nachbehandelt werden. Das Biogas wird dazu im unteren Teil (10) des Separationsreaktors (2) über eine Gaseintragseinrichtung (9) zugegeben. Die bekannten physikalischen Effekte bewirken eine verstärkte Entmischung der Suspension im Separationsreaktor (2). Die mineralischen Bestandteile sinken dabei mehrheitlich in den als Sandspeicherzone zu bezeichnenden unteren Teil (19) des Separationsreaktors (2) und werden über einen Sedimentabzug (11) aus dem System ausgeschleust. Sie können jetzt aus dem Biogasreaktor entnommen werden und gelangen so nicht in die nachfolgende Entwässerungsstufe.

Da der Separationsreaktor (2) gasseitig über Leitungen (17) und (16) mit dem Biogasreaktor (1) verbunden ist, treten auch während des schlagartigen Abzugsvorganges keine größeren Druckschwankungen im Gassystem auf.

Nach Abschluss des Wasch- und Separationsvorganges wird die weitgehend von gröberen, sedimentierbaren Bestandteilen befreite Suspension oberhalb der Sandspeicherzone (19) abgezogen. Die Sandspeicherzone (19) im unteren Teil des Separationsreaktor (2) ist dabei so bemessen, dass in wirtschaftlich vertretbaren Abständen (z.B. einmal täglich) der Sand aus dem unteren Teil abgezogen werden kann. In der einfachsten Form geschieht dies durch Absenken des Flüssigkeitsspiegels und anschließendes Öffnen des Sedimentabzugs (11). Das überwiegend aus Sand, Glas und ähnlichen anorganischen Bestandteilen bestehende Gemisch kann dann im Freigefälle zum Beispiel in einem untergestellten Entwässerungscontainer abfließen. Alternativ ist auch ein Überpumpen in andere Verfahrensstufen (z.B. Kompostierung) mit entsprechenden Feststoffpumpen denkbar.

Der Abzugsvorgang wird durch Schließen der Abzugsarmatur (6) in der Bodenabzugsleitung (4) beendet. Nach Schließen der Verbindungsleitung im Gassystem kann ein neuer Zyklus gestartet werden.

Wie bereits oben aufgezeigt, werden mineralische Bestandteile/Sand im unteren Teil (19) des Separationsreaktor (2) abgeschieden. Dieser Effekt wird durch mehrere Umstände begünstigt:
- Art der Einbindung der Bodenabzugsleitung (4) aus dem Biogasreaktor (1)
- Geschwindigkeitssprung im Separationsreaktor (2) durch entsprechende konstruktive Gestaltung
- Waschen des Biogases durch entsprechende Einblasstelle für komprimiertes Gas
- geeignete Wahl des Abzugsregimes, ausreichende Sedimentationspausen.

Der Separationsreaktor (2) kann gleichzeitig zur Schwimmschlammentnahme aus dem Biogasreaktor (1) genutzt werden. Hierzu steht der Biogasreaktor (1) im oberen Bereich mit dem Abzugsrohr (14) des Separationsreaktors (2) über eine Schwimmschlammabzugsleitung (15) in Verbindung.

Das Abzugsrohr (14) ist außerdem mit einem Spülanschluß (18) versehen, so dass der Separationsreaktor (2) in regelmäßigen Abständen vollständig gereinigt werden kann.

## Patentansprüche

1. Verfahren zum Abzug von zur Entmischung neigenden Suspensionen aus einem Reaktor (1), **dadurch gekennzeichnet, dass** durch schlagartiges Öffnen eines Bodenabzugs (3) eine Sogwirkung auf im Reaktor (1) abgelagerte Stoffe ausgeübt wird und ein Suspensionsstrom mit hohem Feststoffanteil abgezogen wird.

2. Verfahren nach Anspruch 1, **dadurch gekennzeichnet, dass** der Suspensionstrom mit hohem Feststoffanteil einem Seperationsreaktor (2) zugeführt wird, in dem eine gezielte Entmischung der Suspension durchgeführt wird.

3. Verfahren nach Anspruch 1 oder 2, **dadurch gekennzeichnet, dass** der Suspensionsstrom mit hohem Feststoffanteil tangential in einen kegelförmig ausgebildeten unteren Abschnitt (10) des Seperationsreaktors (2) eingeleitet wird und aufgrund des Zykloneffekts in diesem Abschnitt des Separationsreaktors (2) abgesetzte Stoffe aus dem Separationsreaktor (2) abgezogen werden.

4. Verfahren nach Anspruch 3, **dadurch gekennzeichnet, dass** durch Eintrag von Gas in den unteren Abschnitt des Separationsreaktors die Entmischung der Suspension unterstützt wird.

5. Vorrichtung zum Abzug von zur Entmischung neigenden Suspensionen aus einem Reaktor (1) mit einer eine Abzugsarmatur (6) aufweisenden Bodenabzugsleitung (3,4), **dadurch gekennzeichnet, dass** die Bodenabzugsleitung (3,4) in einen Separationsreaktor (2) zur Entmischung der Suspension mündet und die Abzugsarmatur (6) so ausgelegt ist, das ein schlagartiges Öffnen ermöglicht wird.

6. Vorrichtung nach Anspruch 5, **dadurch gekennzeichnet, dass** die Bodenabzugsleitung (3,4) einen Durchmesser von 150 mm bis 400 mm aufweist.

7. Vorrichtung nach Anspruch 5 oder 6, **dadurch gekennzeichnet, dass** der Separationsreaktor (2) ein Volumen von 20m³ bis 100m³ aufweist.

8. Vorrichtung nach einem der Ansprüche 5 bis 7, **dadurch gekennzeichnet, dass** die Bodenabzugsleitung (3,4) tangential in den Separationsreaktor mündet.

9. Vorrichtung nach einem der Ansprüche 5 bis 8, **dadurch gekennzeichnet, dass** der Separationsreaktor senkrecht ausgerichtet ist und im oberen Teil (14) einen wesentlich kleineren Querschnitt aufweist als im mittleren Teil (13).

10. Vorrichtung nach einem der Ansprüche 5 bis 9, **dadurch gekennzeichnet, dass** der Separationsreaktor im unteren Teil (10) kegelförmig ausgebildet ist und die Bodenabzugsleitung (3,4) in diesen kegelförmigen Abschnitt des Separationsreaktors (2) mündet, während am unteren Ende des kegelförmigen Abschnitts ein Sedimentabzug (11) vorgesehen ist

11. Vorrichtung nach einem der Ansprüche 5 bis 10, **dadurch gekennzeichnet, dass** im oberen Bereich des Reaktors (1) ein Schwimmschlammabzug (15) angeordnet ist, der mit dem oberen Bereich (14) des Separationsreaktors (2) in Verbindung steht.

12. Vorrichtung nach einem der Ansprüche 5 bis 11, **dadurch gekennzeichnet, dass** der Separationsreaktor unterhalb der Einmündung eine Feststoffschleuse für einen Austrag von mineralischen Bestandteilen besitzt.

13. Vorrichtung nach einem der Ansprüche 5 bis 12, **dadurch gekennzeichnet, dass** im unteren Bereich des Separationsreaktors eine Gaseintragseinrichtung (9) angeordnet ist.

14. Vorrichtung nach Anspruch 13, **dadurch gekennzeichnet, dass** der Reaktor (1) als Biogasreaktor mit einer Biogasabfuhrleitung (16) ausgebildet ist und die Gaseintragseinrichtung (9) mit der Biogasabführleitung (16) in Verbindung steht.

15. Vorrichtung nach einem der Ansprüche 5 bis 14, **dadurch gekennzeichnet, dass** der Reaktor (1) eine Umwälzeinrichtung aufweist, welche im Reaktor (1) abgelagerte Stoffe gezielt in einen Abzugstrichter in der Reaktormitte transportiert.

16. Vorrichtung nach Anspruch 15, **dadurch gekennzeichnet, dass** die Umwälzeinrichtung mit Wasserstrahldüsen ausgestattet ist.

17. Vorrichtung nach einem der Ansprüche 5 bis 16, **dadurch gekennzeichnet, dass** im oberen Bereich (14) des Separationsreaktors (2) eine Spühldüse zur Reinigung des Separationsreaktors (2) angeordnet ist.
